# EUROPEAN PATENT SPECIFICATION

(11) **EP 2 405 618 B1**
(45) Date of publication and mention of the grant of the patent: **20.11.2013**
(21) Application number: 10168377.9
(22) Date of filing: 02.07.2010
(51) Int. Cl.: H04L 12/58, H04L 29/08

(54) **Email system including synchronization server(s) providing synchronization based upon synchronization indicators stored on mobile devices and related methods**
E-Mail-System mit Synchronisierungsserver(n) zur Synchronisierung auf Grundlage von auf mobilen Vorrichtungen gespeicherten Synchronisierungsindikatoren und zugehörige Verfahren
Système de courrier électronique incluant un ou des serveurs de synchronisation fournissant une synchronisation basée sur des indicateurs de synchronisation stockés dans des dispositifs mobiles et procédés correspondants

(43) Date of publication of application: 11.01.2012
(73) Proprietor: BlackBerry Limited, Waterloo, ON N2L 3W8 (CA)
(72) Inventor: Provo, Nathan, Bellevue, WA 98008 (US); Clarke, David James, Bellevue, WA 98008 (US)
(74) Representative: Fennell, Gareth Charles

(56) References cited:
- EP-A1- 1 993 244
- WO-A2-03/061238
- US-A1- 2005 039 048

## Description

### Technical Field

This application relates to the field of communication systems, and more particularly, to electronic mail (email) system and related method.

### Background

Electronic mailboxes reside on email servers and are used to store email messages. Electronic mailboxes are connected to the Internet to enable users to send and receive incoming and outgoing email messages. These mailboxes may also be extended to deliver email to mobile wireless communication devices via wireless networks. In the case of a corporation, electronic mailboxes are typically located on email servers at the corporation. On the other hand, mailboxes for small businesses or individuals are typically located on Internet service provider (ISP) email servers.

Mail user agents (MUAs) are applications which use a technique called polling to relay messages from the email server to the mail program at a user's computer or mobile wireless communications device. A MUA is a program running either on a user's personal computing device (mobile or stationary), or on a shared email relay or polling server that checks for new mail on behalf of a multitude of such users.
Background art is provided in US 2005/039048 A1, EP 1 993 244 A1 and WO 03/061238 A2.
US 2005/039048 A1 discloses a system in which new email is identified in a manner to speed polling times by utilizing unique identifiers assigned to emails. A unique identifier for the most recently received mail for the mail client, or the predicted value for such, may be compared with the last unique identifier to be assigned by the mail server. If the identifiers are equal, then no new messages have been received and the mail client need not download any headers, which saves bandwidth. When the identifiers are not equal, the mail client need only download the new headers, which also saves bandwidth.
EP 1 993 244 A1 discloses a method, a system, and an apparatus for processing emails through data synchronization. The email synchronization server receives an email or email status sent by the email server and synchronizes it to the email synchronization client, or sends an email notification to the email synchronization client so that the email synchronization client can obtain the email. Alternatively, the email synchronization server is adapted to receive an email from the email synchronization client and forward it to the email server for sending the email out, or receive an email status from the email synchronization client and forward it to the email server for updating. The email synchronization client is adapted to send an email or email status to the email synchronization server, or synchronously receive emails or email status from the email synchronization server, or obtain emails and email status from the email synchronization server after receiving an email notification.
WO 03/061238 A2 is directed to a multifunctional server, in particular a twin-firewall server, comprising at least two independent servers, each with an independent main board, at least one independent CPU, hard discs, memory components and/or network cards. The servers are arranged in a racking housing. The multifunctional server is embodied as an intelligent net access security server, in particular a twin-firewall server. The firewalls run on both independent servers, either redundantly or in parallel. In normal operation the firewalls thus monitor each other, preferably by means of a heartbeat function and/or share the incoming data traffic and/or determine the necessary monitoring functions for each other. In case of a fault with a server and/or a firewall, the remaining server and/or the remaining firewall forms a completely independent functional unit for maintaining a minimum necessary protection.

### Summary of the Invention

The present invention is an email system as defined in Claim 1 of the appended claims. Also provided is a method as defined in Claim 7.

### Brief Description of the Drawings

FIG. 1 is a schematic block diagram of an email system in accordance with an example embodiment.

FIGS. 2 and 3 are flow diagrams illustrating method aspects associated with the system of FIG. 1.

FIG. 4 is a schematic block diagram of an alternative embodiment of the email system of FIG. 1 including a plurality of geographically distributed email synchronization servers located at different datacenters.

FIG. 5 is a schematic block diagram illustrating an example embodiment of a synchronization proxy of the system of FIG. 4.

FIG. 6 is a system flow sequence diagram illustrating session establishment between the mobile wireless communications devices and email synchronization server of the system of FIG. 4.

FIGS. 7 and 8 are system flow sequence diagrams illustrating mailbox synchronization operations performed by the email synchronization server of the system of FIG. 4 for non-notification and notification-based mailboxes, respectively.

FIG. 9 is a block diagram of an example embodiment of a mobile device that may be used with the system of FIG. 1.

FIG. 10 is a block diagram of an example embodiment of a communication subsystem component of the mobile device of FIG. 9.

FIG. 11 is an example block diagram of a node of a wireless network.

FIG. 12 is a block diagram illustrating components of a host system in one example configuration for use with the wireless network of FIG. 11 and the mobile device of FIG. 9.

### Detailed Description

The present description is made with reference to the accompanying drawings, in which example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime notation is used to indicate similar elements or steps in alternative example.

Generally speaking, an electronic mail (email) system is disclosed herein which may include at least one email server configured to store email messages in a plurality of mailboxes, and a plurality of mobile wireless communications devices (also referred to herein as mobile devices) each configured to store email messages and an email synchronization indicator for a respective mailbox. The system may further include at least one email synchronization server configured to establish synchronization sessions with the mobile wireless communications devices and retrieve the email synchronization indicators therefrom, and determine changes to the mailboxes and synchronize respective email messages between the mobile wireless communications devices and the at least one email server during the synchronization sessions based upon the retrieved email synchronization indicators. The at least one email synchronization server may also be configured to communicate updated email synchronization indicators to the mobile wireless communications devices, and terminate the synchronization sessions without storing of the updated email synchronization indicators at the at least one email synchronization server. As such, the email synchronization server(s) may usefully perform the email synchronization operations for the mobile devices, saving their battery and processing resources, yet without having to store email synchronization indicators for numerous mobile wireless communications devices, which saves email synchronization server memory resources.

In some example embodiments, the at least one email synchronization server may comprise a plurality of geographically distributed email synchronization servers which cooperate to replicate synchronization sessions to one another based upon server outages. The email synchronization indicator may comprise at least one of a unique identification (ID) of a last retrieved email message, an Internet Message Access Protocol (IMAP) (or other email protocol) high water mark, and a synchronization anchor, for example.

In addition, the mobile wireless communications devices may be further configured to store server access data, and the at least one email synchronization server may be further configured to retrieve the server access data from the mobile wireless communications devices and determine changes to the mailboxes also based thereon. By way of example, the server access data may comprise at least one of a server host address, a server port address, and a server Secure Sockets Layer (SSL) indicator. Similarly, the mobile wireless communications devices may further be configured to store mailbox access data or login credential data, and the at least one email synchronization server may be further configured to retrieve the mailbox access data or login credential data from the mobile wireless communications devices and determine changes to the mailboxes also based thereon.

Furthermore, the at least one server and the mobile wireless communications devices may be further configured to store calendar data, contact data, or other data related to a user's account with an Internet Service Provider. As such, the at least one email synchronization server may be further configured to synchronize respective calendar data, contact data, or other data between the mobile wireless communications devices and the at least one server during the synchronization sessions. Also by way of example, at least some of the mobile wireless communications devices may comprise cellular devices.

A related email method may include storing email messages in a plurality of mailboxes on at least one email server, storing email messages and an email synchronization indicator for a respective mailbox on a plurality of mobile wireless communications devices, and establishing synchronization sessions between at least one email synchronization server and the mobile wireless communications devices and retrieving the email synchronization indicators from the mobile wireless communications devices to the at least one email synchronization server. The method may further include determining changes to the mailboxes and synchronizing respective email messages between the mobile wireless communications devices and the at least one email server during the synchronization sessions at the at least one email synchronization server based upon the retrieved email synchronization indicators. In addition, updated email synchronization indicators may be communicated from the at least one email synchronization server to the mobile wireless communications devices, and the synchronization sessions may be terminated without storing of the updated email synchronization indicators at the at least one email synchronization server.

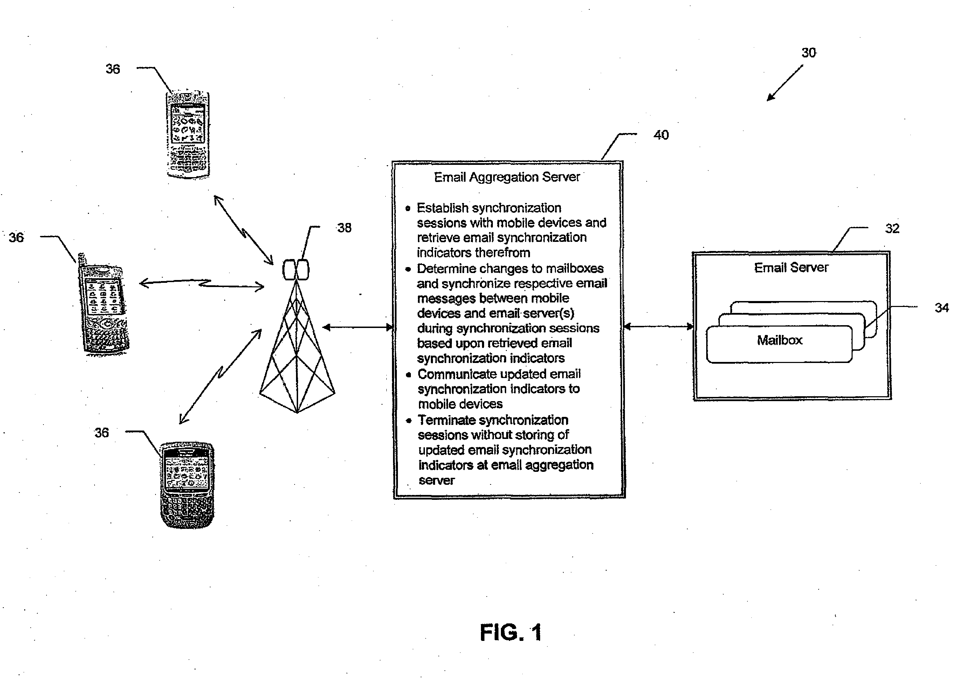

Referring initially to FIGS. 1 through 3, an electronic mail (email) system **30** illustratively includes one or more email servers **32** configured to store email messages in a plurality of mailboxes **34** hosted thereon, as will be appreciated by those skilled in the art. For example, the email server(s) **32** may be a corporate or ISP server (e.g., GMail, Yahoo! mail, MSN mail, etc.). The system **30** further illustratively includes a plurality of mobile wireless communications devices **36** (also referred to as "mobile devices" herein) each configured to store email messages. In the illustrated example, the mobile devices **36** are cellular devices which communicate via a cellular network (illustratively shown as a cellular tower **38** in FIG. 1). However, the mobile devices **36** may instead, or in addition, communicate via other wireless formats, such as wireless LAN (e.g., 802.11x, Bluetooth), WiMAX, etc., as will be appreciated by those skilled in the art.

In particular, the email messages stored on the mobile devices **36** may be synchronized with respective mailboxes **34** hosted on the email server **32.** That is, the email server **32** provides the origin and destination for sending and receiving emails for a particular unique email address, which corresponds to a given mailbox **34** hosted by the email server **32.** To this end, the mobile devices **36** also are configured to store email synchronization indicators for their respective mailbox(es) **34.** Moreover, the system **30** further illustratively includes one or more email synchronization server(s) **40.** Beginning at Block **50,** the email synchronization server **40** is configured to establish synchronization sessions with the mobile devices **36** and retrieve the email synchronization indicators therefrom, at Block **51.**

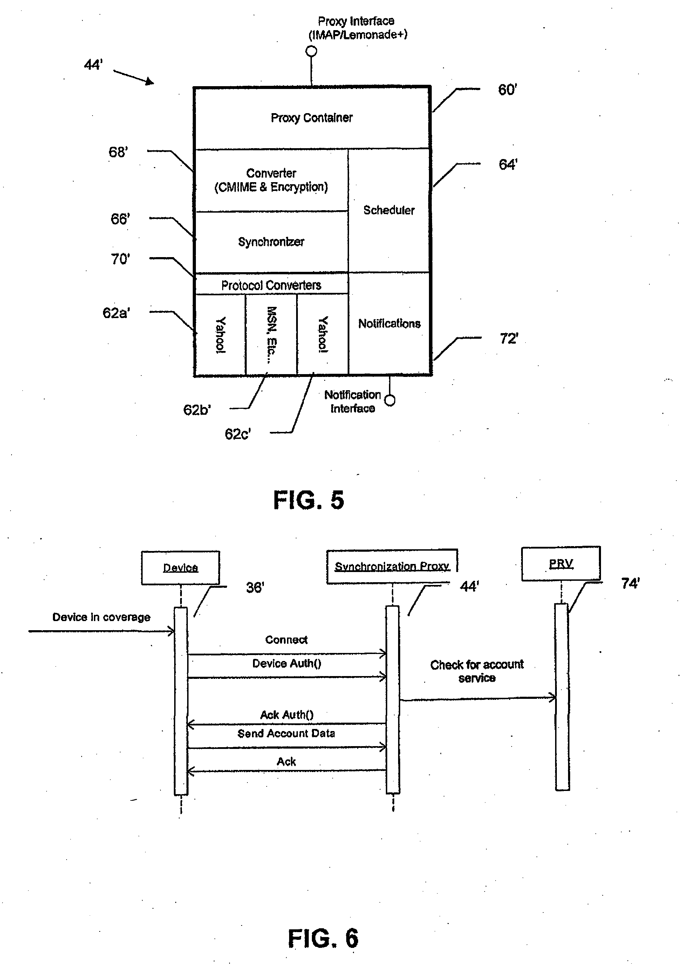

Generally speaking, a mobile device **36** establishes a session with the synchronization server **40,** and the synchronization server accesses data from the mobile device required to establish the session. That is, a static configuration is not present between the synchronization server **40** and a given mobile device **36,** rather the sessions are established dynamically and potentially with different synchronization servers in multiple server implementations, such as through load balancing, for example. A session may persist for an extended period of time (e.g., while a mobile device **36** is powered up and within a network coverage area), and thus many synchronization operations may occur during a given session. The session establishment process will be described further below with reference to FIG. 6.

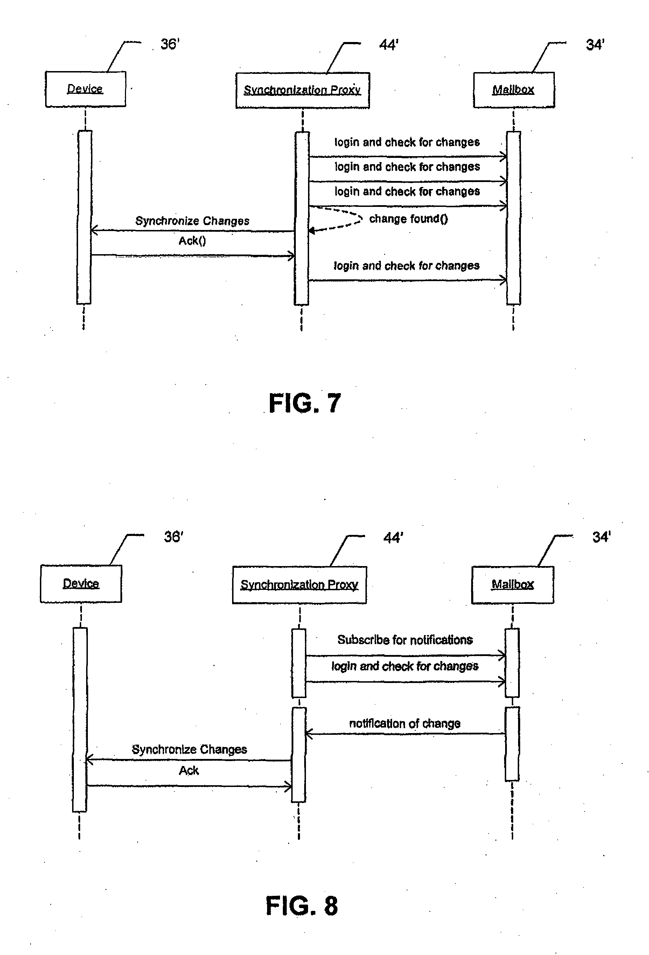

Furthermore, the email synchronization server **40** is also configured to determine changes to the mailboxes **34** and synchronize respective email messages between the mobile devices **36** and the email server(s) **32** during the synchronization sessions based upon the retrieved email synchronization indicators, at Block **52.** Generally speaking, the email synchronization indicators identify for the email synchronization server **40** what email messages or email processing actions were last taken during a prior synchronization session, so that it may be determined which email messages are new or what changes have been made in the interim. By way of example, the email synchronization indicators may comprise a unique identification (ID) of a last retrieved email message, an Internet Message Access Protocol (IMAP) high water mark, a synchronization anchor, etc., as will be appreciated by those skilled in the art (Block **51'**). Synchronization operations performed by the email synchronization server **40** will be discussed further below with respect to FIGS. 7 and 8.

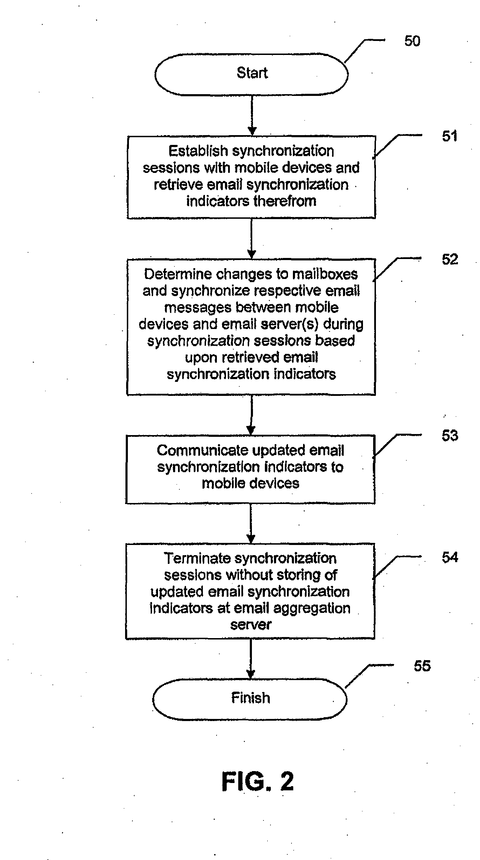

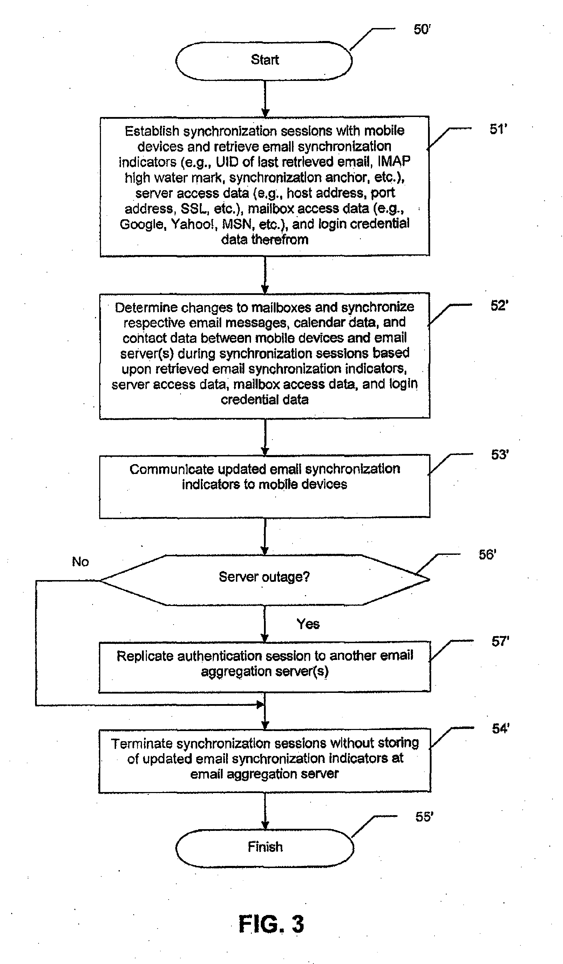

The email synchronization server **40** may also be configured to communicate updated email synchronization indicators to the mobile devices **36** upon performing synchronization operations, at Blocks **53** and **53',** and terminate the synchronization sessions without storing of the updated email synchronization indicators at the email synchronization server **40,** at Blocks **54** and **54',** thus concluding the method illustrated in FIGS. 2 and 3 (Blocks **55** and **55'**). That is, the email synchronization server **32** usefully performs the requisite processing and communication intensive email synchronization operations for the mobile devices **36,** helping conserver their battery and processing resources. Yet, without having to store email synchronization indicators for numerous mobile devices **36** in an internal database, for example, this usefully saves on email synchronization server **40** memory resources and allows for ready deployment of new email synchronization servers as necessary, along with enhanced disaster recovery or failover options, as will be discussed further below. However, it should be noted that the email synchronization server **40** may temporarily store the email synchronization indicators and other account data while synchronization sessions are still active.

In addition to the email synchronization indicators, the mobile devices **36** may be further configured to store other information for accessing respective mailboxes **34,** such as server access data, mailbox access data, or login credential data. The email synchronization server **32** may also be similarly configured to retrieve the server access data, mailbox access data, or login credential data from the mobile devices **36,** and also use this information to determine changes to the mailboxes **34** (Blocks **51'**-**52'**), as will be appreciated by those skilled in the art. By way of example, the server access data may comprise a server host address, a server port address, a server Secure Sockets Layer (SSL) indicator, etc. The mailbox access data may indicate a particular type of mailbox (e.g., GMail, Yahoo!, MSN, IMAP, etc.), which usefully informs the email synchronization server **40** of the appropriate protocols to use. The login credential data may include usernames, passwords, tokens, etc.

In some example embodiments, the email server **32** and the mobile devices **36** may be further configured to store calendar or contact data as well. As such, the email synchronization server **40** may be further configured to also synchronize respective calendar or contact data between the mobile devices **36** and the email server **32** during the synchronization sessions.

Since the mobile devices **36** store the email synchronization indicators, and this information is synchronized with the email synchronization server **40** during session establishment, this allows the email synchronization server to do the "heavy lifting" in terms of synchronization processing and communication with the email server **32.** Such synchronization processing may include synching, compressing, encrypting and formatting of messages for the mobile devices **36** for the lifetime of the session. This is of particular value to the mobile devices **36** in that the mobile devices do not have to spend their processing and memory resources nor undue battery power on synchronizing and downloading of potentially large emails, for example.

Additionally, by storing the email synchronization indicators with the mobile devices **36** between synchronization sessions, rather than with the email synchronization server(s) **40,** the email synchronization servers no longer need to include durable storage (e.g., databases) for this information. This also allows for relatively high availability of the email synchronization data (i.e., by replication), as well as providing a directory for locating this data. Moreover, fail-over recovery need only involve an affected mobile device **36** connecting to another email synchronization server **40** within the same or different datacenter (i.e., disaster recovery) and re-synchronizing, as will be described further below.

Another significant benefit of this approach is that it usefully allows for an expanding user base through modular email synchronization server deployments which are not tied to respective user information databases. Moreover, this may also provide for reduced deployment and operating costs, while at the same time providing increased resiliency and downtime maintenance.

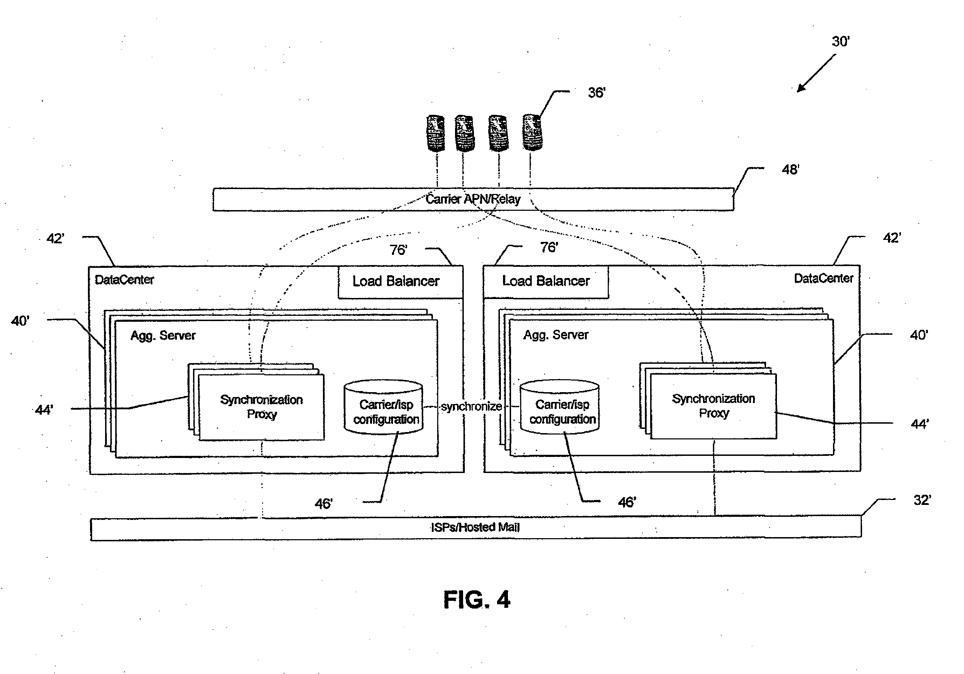

Further details of an example implementation of the system **30** will now be described with reference to FIGS. 4 through 8. For purposes of the following description, an example email protocol of IMAP plus the Lemonade (Enhancements to Internet email to Support Diverse Service Environments) extensions will be used for reference. However, other suitable protocols may also be used, as will be appreciated by those skilled in the art. In the example implementation, the email synchronization servers **40'** are arranged in server farms at datacenters **42',** and each illustratively includes one or more synchronization proxies **44'** and a configuration database **46'** for network carrier or ISP configuration information. Each synchronization proxy **44'** may usefully provide synchronization service to any of the mobile device **36'.**

The mobile devices **36'** connect to a synchronization proxy **44'** via a communication channel **48',** such as an Internet access point name (APN) or relay, for example, as will be appreciated by those skilled in the art. The synchronization proxy **44'** synchronizes mailboxes **34'** (and, optionally, calendar or contact changes) with the mobile devices **36',** and mobile device changes with the mailboxes. That is, the synchronization proxies **44'** are responsible for routinely detecting changes at the mailboxes **34'** and synchronizing these changes with the mobile devices **36',** and vice-versa.

As seen in FIG. 5, each synchronization proxy **44'** illustratively includes a proxy container **60',** to which incoming client commands are translated and dispatched. The results of those commands, if any, are then formed into an appropriate proxy interface response. The proxy container **60'** also accepts messages or commands from proxy components **62a'**-**62c'** and pushes them to the mobile devices **36'.**

As sessions are established and dropped (i.e., terminated), a scheduler **64'** respectively adds and removes sources (i.e., mailboxes **34**') from its scheduling queues. Sources in the scheduling queues are uniformly scheduled over polling or synchronization periods. For sources that support notifications, the scheduler **64'** will subscribe and unsubscribe accordingly, as will be discussed further below with respect to FIG. 8. When a source is ready for synchronization, the scheduler **64'** dispatches a command to a synchronizer **66'** to begin the process. When the synchronizer **66'** is done, the source is re-scheduled for its next synchronization.

More particularly, the synchronizer **66'** is responsible for the discovery of changes that occur at the mailboxes **34',** and pushing those changes to the mobile devices **36'** via a converter **68'** and the proxy container **60'.** The synchronizer **66'** is also responsible for synchronizing changes from the mobile devices **36'** (e.g., delete, re/unread, forward, reply, send, etc.) to the source. The synchronizer **66'** uses the mailbox configuration to start a session with the mailbox **34'** via protocol converters **70'.** The converter **68'** is responsible for compression (i.e., to the mobile devices **36'**) and decompression (i.e., from the mobile devices) of email messages being passed to and from the mobile devices.

For sources that support notifications, a notifications component **72'** is responsible for subscribing, listening, and dispatching events from the ISP, as shown in FIG. 8. Notifications are dispatched to the scheduler **64'** to initiate source synchronization. The protocol converters **70'** provide a common interface to proxy components **62a'-62c'** which communicate in the appropriate format for respective mailbox types (e.g., IMAP, POP, MSN, Yahoo!, etc.). The converters **70'** are used by the synchronizer **66'** to synchronize the mailbox **34'.**

During operation, a mobile device **36'** may open a TCP connection via the carrier APN/relay **48'** for the duration of the synchronization session with a given synchronization proxy **44',** for example. This connection is then used for all traffic to and from the mobile device **36'.** The synchronization proxy **44'** will connect to the ISP server **32'** as necessary to synchronize the mailbox **34'** and to subscribe for notifications. The ISP server **32'** may open a connection to a synchronization proxy **44'** for notification of mailbox changes, as seen in FIG. 8. This approach usefully simplifies the system **30'** in that no routing of messages to the proxy instance servicing a particular account is required, as will be appreciated by those skilled in the art. However, other approaches may be used, such as a non-permanent connection from the given mobile device **36',** and using the carrier APN/relay **48'** as a back channel to the mobile device, as will also be appreciated by the skilled artisan.

Referring to FIG. 6, whenever a mobile device **36'** comes into coverage (cellular, WiFi, etc.), it creates a connection and establishes a session with a synchronization proxy **44'.** The establishment of the session includes synchronizing all appropriate account configuration and synchronization data, including items such as: mailbox type (MSN, IMAP, Google, etc.); login credentials (username, password, token, etc.); sync data (UIDs, IMAP high water mark, sync anchor, etc.); and server info (host, port, SSL, etc), as discussed above. Again, the amount of configuration data will typically depend on the type of mailbox with which synchronization is to be performed. The synchronization proxy may also check with a provisioning module **74'** (PRV) to verify the existence of a valid account for the given mobile device **36'.**

With respect to synchronization from the mailbox **34'** to the mobile device **36',** once a session is established, the synchronization proxy **44'** will begin periodic checks for mailbox changes in the case where the mailbox does not provide notifications, as illustrated in FIG. 7. When a mailbox change is detected the changes will be synchronized to the mobile device **36',** as shown. In the case where the mailbox does support notifications, as seen in FIG. 8, synchronization messages sent back to the mobile device **36'** via the carrier APN/relay **48'** (e.g., using CMIME protocol) will not only include the appropriate synchronization information for email messages, contacts, or calendar items, but they will also include the email synchronization indicators noted above (i.e., message IDs, high water marks, etc.).

Whenever a mobile device **36'** needs to synchronize changes with the mailbox (e.g., delete or mark as read), the mobile device communicates the requisite operations to the synchronization proxy **44'** via the session connection. Furthermore, operations such as "more", "reply", "forward" and "compose" will also be sent over the session connection. Just as in the case of synchronization data being sent from the mailbox to the mobile device **36'** discussed above, the same type of data (e.g., sent via CMIME) will be sent along with these commands and with the addition of the related email synchronization indicators (i.e., these indicators will again be communicated back to the mobile device).

The geographically distributed synchronization server arrangement illustrated in FIG. 4 usefully allows for enhanced failover response. That is, if a synchronization proxy **44'** fails for some reason, the mobile device **36'** will lose its connection with that synchronization proxy, but it merely has to repeat the session establishment sequence to establish a new synchronization session with a different synchronization proxy **44',** either at the same datacenter **42'** or a different datacenter. That is, in the event of an email synchronization sever **40'** outage, the synchronization session information may be replicated to another email synchronization server, at Blocks **56'-57'** (FIG. 3).

Another potential security benefit of the above-described approach is that login credential data (e.g., passwords) do not need to be stored by the email synchronization servers **40'**. This may be of particular benefit in that certain ISPs may not allow an intermediary email synchronization service provider to store passwords on behalf of users. Instead, the login credential information may be passed through to the ISP during session establishment.

Still another security benefit of this approach is that when a mobile device **36'** is sold or transferred, a "wipe" of the device memory will be sufficient to prevent messages from being sent to the wrong mobile device. This is because synchronization of a mailbox **34'** occurs while a mobile device **36'** has a session established. Since wiping a mobile device **36'** will cause the session to be lost, synchronization to that mobile device will be stopped.

As briefly noted above, another significant benefit of the above described approach is the ability to scale for multiple datacenter deployment. Deployment across multiple datacenters **42'** allows for continued subscriber growth, as well as providing redundancy for disaster recovery. Each email synchronization server **40'** may be configured as an individual unit from a scalability and isolation standpoint which shares little or no resources with other email synchronization servers. The system **30'** may be configured so that any mobile device **36'** is able to usefully connect with any email synchronization server **40'.** Load balancing may be performed across the datacenters **42'** using load balancers **76',** such as a domain name system (DNS) based global traffic manager (GTM), for example, as will be appreciated by those skilled in the art. Carrier and ISP configuration may be duplicated across email synchronization servers **40'** through one or more methods such as database replication, nightly synchronizations or administrative scripts/consoles. The method of replication will depend on the consistency requirements of the data, as will be appreciated by those skilled in the art.

With the above-described architecture, an example disaster recovery approach would entail that when a datacenter **42'** is lost, the remaining datacenter(s) have a combined surplus capacity equal to the capacity of the largest datacenter. If a disaster occurs, then each mobile device **36'** connected to the lost datacenter **42'** will reestablish a synchronization session through the load balancer **76'** with one of the remaining datacenters.

In some implementations, the synchronization proxies **44'** (or other component within a datacenter **42'**) may be configured to provide session debugging or logging. That is, synchronization session information may be logged to help locate which synchronization proxies **44'** have performed synchronization for a given mobile device **36'** or mailbox **34'** to allow for trouble shooting performance issues.

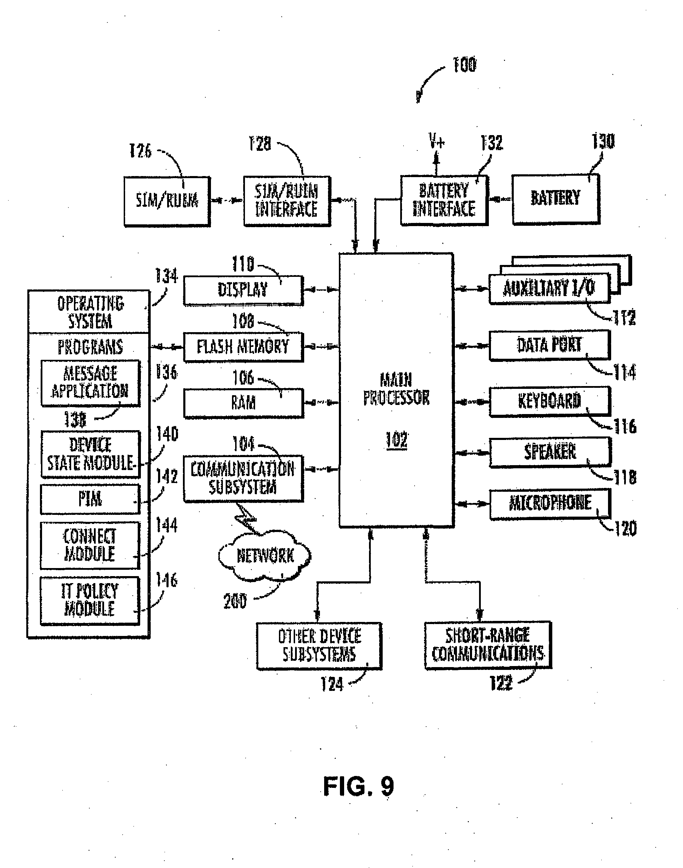

Example components of a mobile wireless communications device that may be used in accordance with an example embodiment are further described below with reference to FIGS. 9-12. Generally speaking, a mobile device may be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 9-12.

Referring first to FIG. 9, shown therein is a block diagram of an example embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **200.** In this example embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the exampels described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device **100** requires a SIM/RUIM card **126** (i.e., Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **200.** By inserting the SIM card/RUIM **126** into the SIM/RUIM interface **128,** a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). A benefit of using the SIM card/RUIM **126** is that a subscriber is not necessarily bound by any single physical mobile device. The SIM card/RUIM **126** may store additional subscriber information for a mobile device as well, including date book (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some exampels, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some exampels, some of the sent and received messages may be stored remotely from the device **100** such as in a data store of an associated host system that the mobile device **100** communicates with.

The software applications can further include a device state module **140,** a Personal Information Manager (PIM) **142,** and other suitable modules (not shown). The device state module **140** provides persistence, i.e., the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, email, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly useful when the host computer system is the mobile device subscriber's office computer system.

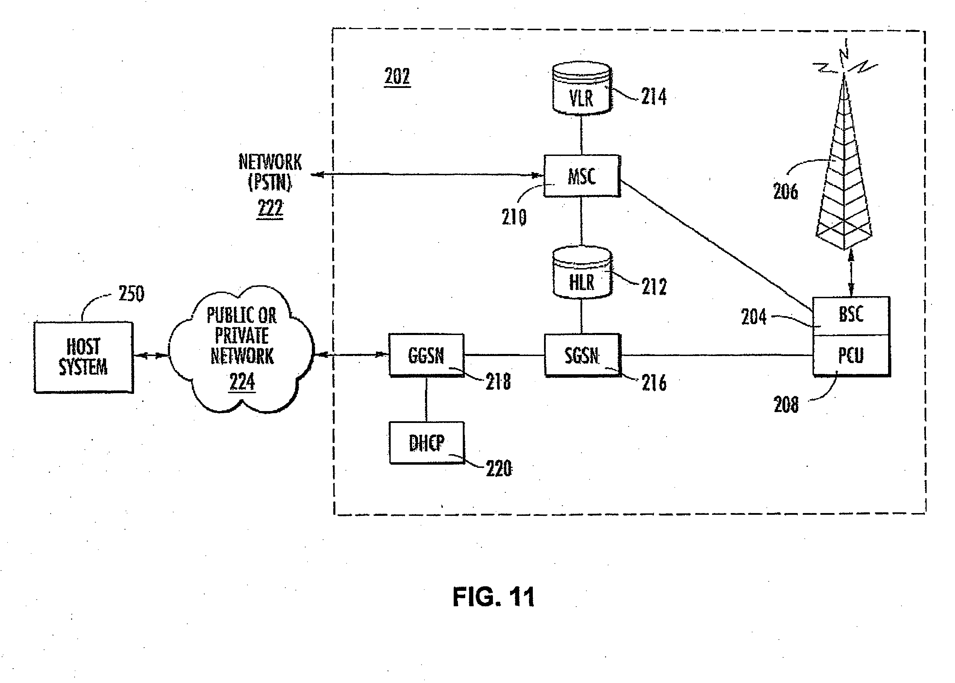

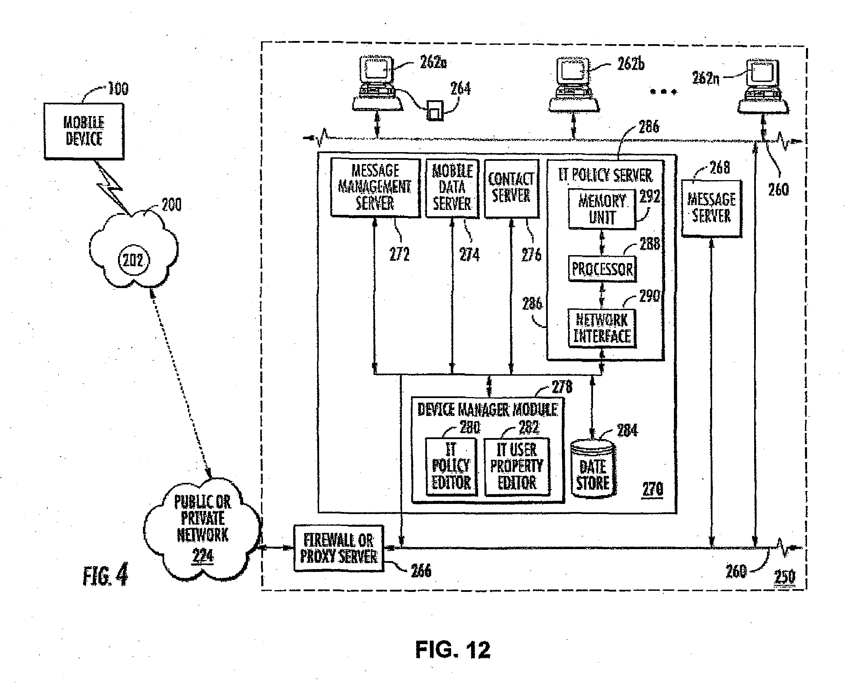

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 11 and 12, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100.** Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some exampels, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100.** These software applications can be third party applications, which are added after the manufacture of the mobile device **100.** Examples of third party applications include games, calculators, utilities, etc.

The additional applications can be loaded onto the mobile device **100** through at least one of the wireless network **200,** the auxiliary I/O subsystem **112,** the data port **114,** the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an email message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as email messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118,** the display **110** can also be used to provide additional information such as the identity of a calling party, duration of a voice call, or other voice call related information.

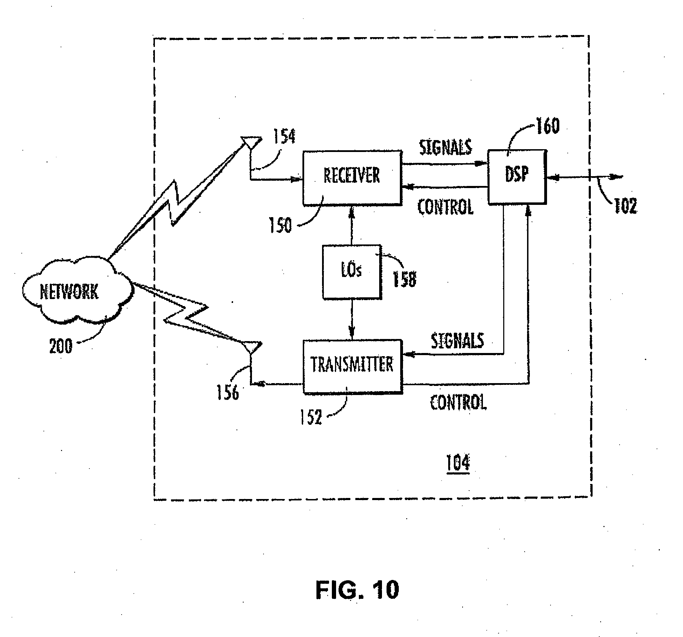

Referring now to FIG. 10, an example block diagram of the communication subsystem component **104** is shown. The communication subsystem **104** includes a receiver **150,** a transmitter **152,** as well as associated components such as one or more embedded or internal antenna elements **154** and **156,** Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 10 serves only as one example.

Signals received by the antenna **154** through the wireless network **200** are input to the receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160.** In a similar manner, signals to be transmitted are processed, including modulation and encoding, by the DSP **160.** These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device **100** and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver **150** is periodically turned off to conserve power until it is needed to receive signals or information (if at all) during designated time periods.

Referring now to FIG. 11, a block diagram of an example implementation of a node **202** of the wireless network **200** is shown. In practice, the wireless network **200** includes one or more nodes **202.** In conjunction with the connect module **144,** the mobile device **100** can communicate with the node **202** within the wireless network **200.** In the example implementation of FIG. 11, the node **202** is configured in accordance with General Packet Radio Service (GPRS) and Global Systems for Mobile (GSM) technologies. The node **202** includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208,** the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell." The fixed transceiver equipment transmits communication signals to and receives communication signals from mobile devices within its cell via the station **206.** The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support, namely packet switched data support, within GSM. The SGSN **216** and the MSC **210** have similar responsibilities within the wireless network **200** by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200.** During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218.** There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200,** insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 12, shown therein is a block diagram illustrating components of an example configuration of a host system **250** that the mobile device **100** can communicate with in conjunction with the connect module **144.** The host system **250** will typically be a corporate enterprise or other local area network (LAN), but may also be a home office computer or some other private system, for example, in variant implementations. In this example shown in FIG. 12, the host system **250** is depicted as a LAN of an organization to which a user of the mobile device **100** belongs. Typically, a plurality of mobile devices can communicate wirelessly with the host system **250** through one or more nodes **202** of the wireless network **200.**

The host system **250** includes a number of network components connected to each other by a network **260.** For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260,** and each may or may not be equipped with an accompanying cradle **264.** The cradle **264** facilitates the loading of information (e.g., PIM data, private symmetric encryption keys to facilitate secure communications) from the user computer **262a** to the mobile device **100,** and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 12. Furthermore, only a subset of network components of the host system **250** are shown in FIG. 9 for ease of exposition, and it will be understood by persons skilled in the art that the host system **250** will include additional components that are not explicitly shown in FIG. 10 for this example configuration. More generally, the host system **250** may represent a smaller part of a larger network (not shown) of the organization, and may include different components and/or be arranged in different topologies than that shown in the example embodiment of FIG. 12.

To facilitate the operation of the mobile device 100 and the wireless communication of messages and message-related data between the mobile device **100** and components of the host system **250,** a number of wireless communication support components **270** can be provided. In some implementations, the wireless communication support components **270** can include a message management server **272,** a mobile data server **274,** a contact server **276,** and a device manager module **278.** The device manager module **278** includes an IT Policy editor **280** and an IT user property editor **282,** as well as other software components for allowing an IT administrator to configure the mobile devices **100.** In an alternative example, there may be one editor that provides the functionality of both the IT policy editor **280** and the IT user property editor **282.** The support components **270** also include a data store **284,** and an IT policy server **286.** The IT policy server **286** includes a processor **288,** a network interface **290** and a memory unit **292.** The processor **288** controls the operation of the IT policy server **286** and executes functions related to the standardized IT policy as described below. The network interface **290** allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An benefit of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device 100 are initially received by a message server **268** of the host system **250.** Such messages may originate from any number of sources. For instance, a message may have been sent by a sender from the computer **262b** within the host system **250,** from a different mobile device (not shown)
connected to the wireless network **200** or a different wireless network, or from a different computing device, or other device capable of sending messages, via the shared network infrastructure **224,** possibly through an application service provider (ASP) or Internet service provider (ISP), for example.

The message server **268** typically acts as the primary interface for the exchange of messages, particularly email messages, within the organization and over the shared network infrastructure **224.** Each user in the organization that has been set up to send and receive messages is typically associated with a user account managed by the message server **268.** Some example implementations of the message server **268** include a Microsoft Exchange^{™} server, a Lotus Domino^{™} server, a Novell Groupwise^{™} server, or another suitable mail server installed in a corporate environment. In some implementations, the host system **250** may include multiple message servers **268.** The message server **268** may also be adapted to provide additional functions beyond message management, including the management of data associated with calendars and task lists, for example.

When messages are received by the message server **268,** they are typically stored in a data store associated with the message server **268.** In at least some exampels, the data store may be a separate hardware unit, such as data store **284,** that the message server **268** communicates with. Messages can be subsequently retrieved and delivered to users by accessing the message server **268.** For instance, an email client application operating on a user's computer **262a** may request the email messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e., those received in the past two to three months for example) can be stored on the mobile device **100.**

When operating the mobile device **100,** the user may wish to have email messages retrieved for delivery to the mobile device **100.** The message application **138** operating on the mobile device **100** may also request messages associated with the user's account from the message server **268.** The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device **100** is assigned its own email address, and messages addressed specifically to the mobile device **100** are automatically redirected to the mobile device **100** as they are received by the message server **268.**

The message management server **272** can be used to specifically provide support for the management of messages, such as email messages, that are to be handled by mobile devices. Generally, while messages are still stored on the message server **268,** the message management server **272** can be used to control when, if, and how messages are sent to the mobile device **100.** The message management server **272** also facilitates the handling of messages composed on the mobile device **100,** which are sent to the message server **268** for subsequent delivery.

For example, the message management server **272** may monitor the user's "mailbox" (e.g., the message store associated with the user's account on the message server **268**) for new email messages, and apply user-definable filters to new messages to determine if and how the messages are relayed to the user's mobile device **100.** The message management server **272** may also compress and encrypt new messages (e.g., using an encryption technique such as Data Encryption Standard (DES), Triple DES, or Advanced Encryption Standard (AES)) and push them to the mobile device **100** via the shared network infrastructure **224** and the wireless network **200.** The message management server **272** may also receive messages composed on the mobile device **100** (e.g., encrypted using Triple DES), decrypt and decompress the composed messages, re-format the composed messages if desired so that they will appear to have originated from the user's computer **262a,** and re-route the composed messages to the message server **268** for delivery.

Certain properties or restrictions associated with messages that are to be sent from and/or received by the mobile device **100** can be defined (e.g., by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g., "blocks") of a message stored on the message server **268** to the mobile device **100.** For example, in some cases, when a message is initially retrieved by the mobile device **100** from the message server **268,** the message management server **272** may push only the first part of a message to the mobile device **100,** with the part being of a pre-defined size (e.g., 2 KB). The user can then request that more of the message be delivered in similar-sized blocks by the message management server **272** to the mobile device **100,** possibly up to a maximum predefined message size. Accordingly, the message management server **272** facilitates better control over the type of data and the amount of data that is communicated to the mobile device **100,** and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address and email address of the contact, among other information. The contact server **276** can also provide a global address list that contains the contact information for all of the contacts associated with the host system **250.**

It will be understood by persons skilled in the art that the message management server **272,** the mobile data server **274,** the contact server **276,** the device manager module **278,** the data store **284** and the IT policy server **286** do not need to be implemented on separate physical servers within the host system **250.** For example, some or all of the functions associated with the message management server **272** may be integrated with the message server **268,** or some other server in the host system **250.** Alternatively, the host system **250** may include multiple message management servers **272,** particularly in variant implementations where a large number of mobile devices need to be supported.

Alternatively, in some example embodiments, the IT policy server **286** can provide the IT policy editor **280,** the IT user property editor **282** and the data store **284.** In some cases, the IT policy server **286** can also provide the device manager module **278.** The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit **292** can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices **100** such as auto signature text, WLAN/VoIP/VPN configuration, security requirements (e.g., encryption algorithms, password rules, etc.), specifying themes or applications that are allowed to run on the mobile device **100,** and the like.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

FIGs. 2-3 are flow diagrams and FIGs. 6-8 are flow sequence diagrams for example embodiment methods. Some of the steps illustrated in the diagrams may be performed in an order other than that which is described. Also, it should be appreciated that not all of the steps described in the flow chart are required to be performed, that additional steps may be added, and that some of the illustrated steps may be substituted with other steps.

## Claims

1. An electronic mail (email) system (30) comprising:
at least one email server (32) configured to store email messages in a plurality of mailboxes (34);
a plurality of mobile wireless communications devices (36) each configured to store email messages and an email synchronization indicator for a respective mailbox; and
a plurality of geographically distributed email synchronization servers (40) configured to
establish synchronization sessions with said mobile wireless communications devices (36) and retrieve the email synchronization indicators therefrom,
determine changes to the mailboxes (34) and synchronize respective email messages between said mobile wireless communications devices (36) and said at least one email server (32) during the synchronization sessions based upon the retrieved email synchronization indicators,
communicate updated email synchronization indicators to said mobile wireless communications devices (36), and
terminate the synchronization sessions without storing of the updated email synchronization indicators at the plurality of email synchronization servers (40);
wherein said plurality of email synchronization servers (40) are further configured to cooperate to replicate synchronization sessions between one another based upon server outages.

2. The email system (30) of Claim 1 wherein the email synchronization indicator comprises at least one of a unique identification (ID) of a last retrieved email message, an Internet Message Access Protocol (IMAP) high water mark, and a synchronization anchor.

3. The email system (30) of Claim 1 wherein said mobile wireless communications devices (36) are further configured to store server access data; and wherein said email synchronization servers (40) are further configured to retrieve the server access data from said mobile wireless communications devices (36) and determine changes to the mailboxes (34) also based thereon.

4. The email system (30) of Claim 3 wherein the server access data comprises at least one of a server host address, a server port address, and a server Secure Sockets Layer (SSL) indicator.

5. The email system (30) of Claim 1 wherein said mobile wireless communications devices (36) are further configured to store mailbox access data; and wherein said email synchronization servers (40) are further configured to retrieve the mailbox access data from said mobile wireless communications devices (36) and determine changes to the mailboxes (34) also based thereon.

6. The email system (30) of Claim 1 wherein said mobile wireless communications devices (36) are further configured to store login credential data; and wherein said email synchronization servers (40) are further configured to retrieve the login credential data from said mobile wireless communications devices (36) and determine changes to the mailboxes (34) also based thereon.

7. An electronic mail method comprising:
storing email messages in a plurality of mailboxes (34) on at least one email server (32);
storing email messages and an email synchronization indicator for a respective mailbox on a plurality of mobile wireless communications devices (36);
using a plurality of geographically distributed email synchronization servers (40) to establish synchronization sessions with the mobile wireless communications devices and retrieving the email synchronization indicators from the mobile wireless communications devices (36) to the plurality of email synchronization servers (40);
determining changes to the mailboxes (34) and synchronizing respective email messages between the mobile wireless communications devices (36) and the plurality of email synchronization servers (40) during the synchronization sessions at the plurality of email synchronization servers (40) based upon the retrieved email synchronization indicators;
communicating updated email synchronization indicators from the plurality of email synchronization servers (40) to the mobile wireless communications devices (36);
terminating the synchronization sessions without storing of the updated email synchronization indicators at the plurality of email synchronization servers (40); and
cooperating among the plurality of email synchronization servers (40) to replicate synchronization sessions between one another based upon server outages.

8. The method of Claim 7 wherein the email synchronization indicator comprises at least one of a unique identification (ID) of a last retrieved email message, an Internet Message Access Protocol (IMAP) high water mark, and a synchronization anchor.

9. The method of Claim 7 further comprising storing server access data on the mobile wireless communications devices (36); and further comprising retrieving the server access data from the mobile wireless communications devices (36) to the plurality of email synchronization servers (40).

## Patentansprüche

1. Ein "elektronische Mail (Email)"-System (30), das aufweist:
zumindest einen Email-Server (32), der konfiguriert ist zum Speichern von Email-Nachrichten in einer Vielzahl von Mailboxen (34);
eine Vielzahl von mobilen drahtlosen Kommunikationsvorrichtungen (36),
die jeweils konfiguriert sind zum Speichern von Email-Nachrichten und
eines Email-Synchronisierungs-Indikators für eine jeweilige Mailbox; und
eine Vielzahl von geographisch verteilten Email-Synchronisierungs-Servern (40), die konfiguriert sind zum
Herstellen von Synchronisierungssitzungen mit den mobilen drahtlosen Kommunikationsvorrichtungen (36) und Abrufen der Email-Synchronisierungs-Indikatoren davon,
Bestimmen von Änderungen an den Mailboxen (34) und Synchronisieren jeweiliger Email-Nachrichten zwischen den mobilen drahtlosen Kommunikationsvorrichtungen (36) und dem zumindest einen Email-Server (32) während der Synchronisierungssitzungen basierend auf den abgerufenen Email-Synchronisierungs-Indikatoren,
Kommunizieren aktualisierter Email-Synchronisierungs-Indikatoren an die mobilen drahtlosen Kommunikationsvorrichtungen (36), und
Beenden der Synchronisierungssitzungen ohne ein Speichern der aktualisierten Email-Synchronisierungs-Indikatoren an der Vielzahl von Email-Synchronisierungs-Servern (40);
wobei die Vielzahl von Email-Synchronisierungs-Servern (40) weiter konfiguriert ist zum Zusammenarbeiten, um Synchronisierungssitzungen untereinander basierend auf Serverausfällen zu replizieren.

2. Das Email-System (30) gemäß Anspruch 1, wobei der Email-Synchronisierungs-Indikator zumindest eines aus einer eindeutigen Identifikation (ID - identification) einer zuletzt abgerufenen Email-Nachricht, einer IMAP(Internet Message Access Protocol)-Höchstmarke und einem Synchronisationsanker aufweist.

3. Das Email-System (30) gemäß Anspruch 1, wobei die mobilen drahtlosen Kommunikationsvorrichtungen (36) weiter konfiguriert sind zum Speichern von Serverzugangsdaten; und wobei die Email-Synchronisierungs-Server (40) weiter konfiguriert sind zum Abrufen der Serverzugangsdaten von den mobilen drahtlosen Kommunikationsvorrichtungen (36) und zum Bestimmen von Änderungen an den Mailboxen (34) ebenfalls darauf basierend.

4. Das Email-System (30) gemäß Anspruch 3, wobei die Serverzugangsdaten zumindest eines aus einer Server-Host-Adresse, einer Server-Port-Adresse und einer Server-SSL(Secure Sockets Layer)-Angabe aufweisen.

5. Das Email-System (30) gemäß Anspruch 1, wobei die mobilen drahtlosen Kommunikationsvorrichtungen (36) weiter konfiguriert sind zum Speichern von Mailbox-Zugangsdaten; und wobei die Email-Synchronisierungs-Server (40) weiter konfiguriert sind zum Abrufen der Mailbox-Zugangsdaten von den mobilen drahtlosen Kommunikationsvorrichtungen (36) und zum Bestimmen von Änderungen an den Mailboxen (34) ebenfalls darauf basierend.

6. Das Email-System (30) gemäß Anspruch 1, wobei die mobilen drahtlosen Kommunikationsvorrichtungen (36) weiter konfiguriert sind zum Speichern von Anmelde-Berechtigungsnachweis-Daten; und wobei die Email-Synchronisierungs-Server (40) weiter konfiguriert sind zum Abrufen der Anmelde-Berechtigungsnachweis-Daten von den mobilen drahtlosen Kommunikationsvorrichtungen (36) und zum Bestimmen von Änderungen an den Mailboxen (34) ebenfalls darauf basierend.

7. Ein "elektronische Mail"-Verfahren, das aufweist:
Speichern von Email-Nachrichten in einer Vielzahl von Mailboxen (34) auf zumindest einem Email-Server (32);
Speichern von Email-Nachrichten und eines Email-Synchronisierungs-Indikators für eine jeweilige Mailbox auf einer Vielzahl von mobilen drahtlosen Kommunikationsvorrichtungen (36);
Verwenden einer Vielzahl von geographisch verteilten Email-Synchronisierungs-Servern (40) zum Herstellen von Synchronisierungssitzungen mit den mobilen drahtlosen Kommunikationsvorrichtungen und Abrufen der Email-Synchronisierungs-Indikatoren von den mobilen drahtlosen Kommunikationsvorrichtungen (36) auf die Vielzahl von Email-Synchronisierungs-Servern (40);
Bestimmen von Änderungen an den Mailboxen (34) und Synchronisieren jeweiliger Email-Nachrichten zwischen den mobilen drahtlosen Kommunikationsvorrichtungen (36) und der Vielzahl von Email-Synchronisierungs-Servern (40) während der Synchronisierungssitzungen an der Vielzahl von Email-Synchronisierungs-Servern (40) basierend auf den abgerufenen Email-Synchronisierungs-Indikatoren;
Kommunizieren aktualisierter Email-Synchronisierungs-Indikatoren von der Vielzahl von Email-Synchronisierungs-Servern (40) an die mobilen drahtlosen Kommunikationsvorrichtungen (36);
Beenden der Synchronisierungssitzungen ohne ein Speichern der aktualisierten Email-Synchronisierungs-Indikatoren an der Vielzahl von Email-Synchronisierungs-Servern (40); und
Zusammenarbeiten unter der Vielzahl von Email-Synchronisierungs-Servern (40), um Synchronisierungssitzungen untereinander basierend auf Serverausfällen zu replizieren.

8. Das Verfahren gemäß Anspruch 7, wobei der Email-Synchronisierungs-Indikator zumindest eines aus einer eindeutigen Identifikation (ID - identification) einer zuletzt abgerufenen Email-Nachricht, einer IMAP(Internet Message Access Protocol)-Höchstmarke und einem Synchronisationsanker aufweist.

9. Das Verfahren gemäß Anspruch 7, das weiter aufweist ein Speichern von Serverzugangsdaten auf den mobilen drahtlosen Kommunikationsvorrichtungen (36); und weiter aufweist ein Abrufen der Serverzugangsdaten von den mobilen drahtlosen Kommunikationsvorrichtungen (36) auf die Vielzahl von Email-Synchronisierungs-Servern (40).

## Revendications

1. Système de courriers électroniques (courriels) (30) comprenant :
au moins un serveur de courriels (32) configuré pour stocker des messages électroniques dans une pluralité de boîtes aux lettres (34) ;
une pluralité de dispositifs de communications sans fil mobiles (36) chacun configuré pour stocker des messages électroniques et un indicateur de synchronisation de courriels pour une boîte aux lettres respective ; et
une pluralité de serveurs de synchronisation de courriels distribués géographiquement (40) configuré :
pour établir des sessions de synchronisation avec lesdits dispositifs de communications sans fil mobiles (36) et pour extraire les indicateurs de synchronisation de courriels à partir de ceux-ci,
pour déterminer des changements apportés aux boîtes aux lettres (34) et pour synchroniser des messages électroniques respectifs entre lesdits dispositifs de communications sans fil mobiles (36) et ledit au moins un serveur de courriels (32) pendant les sessions de synchronisation sur la base des indicateurs de synchronisation de courriels extraits,
pour communiquer des indicateurs de synchronisation de courriels mis à jour auxdits dispositifs de communications sans fil mobiles (36),
et
pour achever les sessions de synchronisation sans stocker les indicateurs de synchronisation de courriels mis à jour au niveau de la pluralité de serveurs de synchronisation de courriels (40) ;
dans lequel ladite pluralité de serveurs de synchronisation de courriels (40) sont en outre configurés pour coopérer afin de reproduire des sessions de synchronisation entre eux sur la base de pannes de serveur.

2. Système de courriels (30) de la revendication 1, dans lequel l'indicateur de synchronisation de courriels comprend au moins l'un d'une identification unique (ID) d'un dernier message électronique extrait, d'un filigrane élevé de protocole d'accès aux messages internet (IMAP), et d'une ancre de synchronisation.

3. Système de courriels (30) de la revendication 1, dans lequel lesdits dispositifs de communications sans fil mobiles (36) sont en outre configurés pour stocker des données d'accès aux serveurs ; et dans lequel lesdits serveurs de synchronisation de courriels (40) sont en outre configurés pour extraire les données d'accès aux serveurs à partir desdits dispositifs de communications sans fil mobiles (36) et pour déterminer des changements apportés aux boîtes aux lettres (34) également sur la base de celles-ci.

4. Système de courriels (30) de la revendication 3, dans lequel les données d'accès aux serveurs comprennent au moins l'un d'une adresse d'hôte de serveur, d'une adresse de port de serveur, et d'un indicateur de couche d'échange sécurisé (SSL) de serveur.

5. Système de courriels (30) de la revendication 1, dans lequel lesdits dispositifs de communications sans fil mobiles (36) sont en outre configurés pour stocker des données d'accès aux boîtes aux lettres ; et dans lequel lesdits serveurs de synchronisation de courriels (40) sont en outre configurés pour extraire les données d'accès aux boîtes aux lettres à partir desdits dispositifs de communications sans fil mobiles (36) et pour déterminer des changements apportés aux boîtes aux lettres (34) également sur la base de celles-ci.

6. Système de courriels (30) de la revendication 1, dans lequel lesdits dispositifs de communications sans fil mobiles (36) sont en outre configurés pour stocker des données de justificatifs de connexion ; et dans lequel lesdits serveurs de synchronisation de courriels (40) sont en outre configurés pour extraire les données de justificatifs de connexion à partir desdits dispositifs de communications sans fil mobiles (36) et pour déterminer des changements apportés aux boîtes aux lettres (34) également sur la base de celles-ci.

7. Procédé relatif aux courriers électroniques comprenant :
le stockage des messages électroniques dans une pluralité de boîtes aux lettres (34) sur au moins un serveur de courriels (32) ;
le stockage des messages électroniques et d'un indicateur de synchronisation de courriels pour une boîte aux lettres respective sur une pluralité de dispositifs de communications sans fil mobiles (36) ;
l'utilisation d'une pluralité de serveurs de synchronisation de courriels distribués géographiquement (40) pour établir des sessions de synchronisation avec les dispositifs de communication sans fil mobiles et l'extraction des indicateurs de synchronisation de courriels à partir des dispositifs de communications sans fil mobiles (36) vers la pluralité de serveurs de synchronisation de courriels (40) ;
la détermination des changements apportés aux boîtes aux lettres (34) et la synchronisation des messages électroniques respectifs entre les dispositifs de communications sans fil mobiles (36) et la pluralité de serveurs de synchronisation de courriels (40) pendant les sessions de synchronisation au niveau de la pluralité de serveurs de synchronisation de courriels (40) sur la base des indicateurs de synchronisation de courriels extraits ;
la communication des indicateurs de synchronisation de courriels mis à jour à partir de la pluralité de serveurs de synchronisation de courriels (40) aux dispositifs de communications sans fil mobiles (36) ;
l'achèvement des sessions de synchronisation sans stocker les indicateurs de synchronisation de courriels mis à jour au niveau de la pluralité de serveurs de synchronisation de courriels (40) ; et
la coopération entre la pluralité de serveurs de synchronisation de courriels (40) pour reproduire des sessions de synchronisation entre eux sur la base de pannes de serveur.

8. Procédé de la revendication 7, dans lequel l'indicateur de synchronisation de courriels comprend au moins l'un d'une identification unique (ID) d'un dernier message électronique extrait, d'un filigrane élevé de protocole d'accès aux messages internet (IMAP), et d'une ancre de synchronisation.

9. Procédé de la revendication 7, comprenant en outre le stockage des données d'accès aux serveurs sur les dispositifs de communications sans fil mobiles (36) ; et comprenant en outre l'extraction des données d'accès aux serveurs à partir des dispositifs de communications sans fil mobiles (36) vers la pluralité de serveurs de synchronisation de courriels (40).
